# EUROPEAN PATENT APPLICATION

(11) **EP 4 773 160 A1**
(43) Date of publication of application: **08.07.2026**
(21) Application number: 24881954.2
(22) Date of filing: 07.06.2024
(51) Int. Cl.: H01F 27/245, H01F 1/147, H01F 27/25

(54) **WOUND CORE AND TRANSFORMER**

(30) Priority: 27.10.2023 JP 2023184924
(71) Applicant: JFE Steel Corporation, Tokyo 100-0011 (JP)
(72) Inventor: ICHIHARA, Yoshihisa, Tokyo 100-0011 (JP); OMURA, Takeshi, Tokyo 100-0011 (JP); NAKAMURA, Koji, Tokyo 100-0011 (JP)
(74) Representative: Haseltine Lake Kempner LLP
(86) International application number: PCT/JP2024/020943
(87) International publication number: WO 2025/088836

(57) **Abstract**

A wound iron core (10) is configured by winding a grain-oriented electrical steel sheet (11) in a rolling direction. A width of a shear region of the wound iron core (10) in a cross-section parallel to the rolling direction at a bent portion of a corner (12) of the wound iron core (10), within a region from a center of thickness of the grain-oriented electrical steel sheet (11) to an outer peripheral side of the wound iron core (10), is 100 µm or more and 400 µm or less.

## Description

### TECHNICAL FIELD

The present disclosure relates to wound iron cores and transformers.

### BACKGROUND

Iron cores of transformers are broadly classified into wound iron cores and laminate iron cores. In both types of iron cores, grain-oriented electrical steel sheets are often used as the raw material.

There are two known types of wound iron cores. In the present specification, one is referred to as "Tranco-core" or "Tranco", and the other is referred to as "Unicore".

FIG. 1 schematically illustrates the two types. Tranco is described in Patent Literature (PTL) 1, for example. Tranco is a wound iron core made by winding a grain-oriented electrical steel sheet in the rolling direction to form a baumkuchen-like shape and then pressing from all sides to form a rectangular shape with arc-shaped corners.

Unicore is described in PTL 2, for example. Unicore is a wound iron core in which steel sheets, which have been bent in advance at the locations corresponding to the corners to form angled portions, are stacked in the thickness direction.

Compared to Tranco, Unicore does not require pressing, so the equipment required for production can be relatively small. Furthermore, since the strain introduced into the steel sheets during production of Unicore is concentrated only in the areas where bending is performed, annealing equipment for strain relief is not required. Unicore is being increasingly adopted because of these industrial advantages.

In recent years, from the viewpoint of energy conservation and environmental regulations, there has been a strong demand for reducing energy loss in transformers and reducing noise during operation of transformers. To improve the efficiency of transformers, efforts are being made to improve the properties of grain-oriented electrical steel sheets, which are used as iron core raw material.

It is known that when a transformer is produced using grain-oriented electrical steel sheets as the iron core raw material, the iron loss of the transformer increases more than the iron loss of the electrical steel sheets that are the raw material. This increase ratio is known as the building factor. The building factor is defined as the iron loss of the transformer divided by the iron loss of the raw material electrical steel sheet.

Therefore, to improve the efficiency of transformers, it is important during development to improve the building factor in addition to improving the properties of the electrical steel sheet used as the raw material.

Various methods are being explored to improve the building factor. For example, PTL 3 proposes subjecting a grain-oriented electrical steel sheet in the vicinity of the joint to a magnetic domain refining treatment using strain. The magnetic domain refining technique is a technique that forms magnetic discontinuities in the rolling direction by using thermally distorted portions. By forming such magnetic discontinuities, the magnetic domain refining technique can refine the magnetic domain of the grain-oriented electrical steel sheet and improve iron loss.

PTL 4, for example, proposes tilting the joint with respect to the winding direction to improve iron loss due to magnetic flux transfer.

In the case of Unicore, large distortion is imparted to the corners by the bending process, and this distortion increases the building factor. PTL 5, for example, proposes a method of improving the deterioration of magnetism due to distortion at the corners by performing a magnetic domain refining treatment via the addition of grooves to the bent portion of the corners.

### CITATION LIST

### Patent Literature

PTL 1: JP 2016-146441 A
PTL 2: JP 2005-286169 A
PTL 3: JP 2020-96100 A
PTL 4: JP 2005-150507 A
PTL 5: JP 2021-163942 A

### SUMMARY

### (Technical Problem)

As methods of improving the building factor, the methods disclosed in PTL 3 to 5 are all effective. However, the matter disclosed in each of PTL 3 to 5 is a proposal that assumes the performance of additional treatment when designing the iron core. This has led to problems such as an increase in production costs due to the need to change the shear direction during production and an increase in the number of production steps.

It is an aim of the present disclosure to provide a wound iron core and a transformer that can improve the building factor by suppressing an increase in the number of production steps and the production costs.

### (Solution to Problem)

[1] A wound iron core configured by winding a grain-oriented electrical steel sheet in a rolling direction, wherein
   a width of a shear region in a cross-section parallel to the rolling direction at a bent portion of a corner of the wound iron core, within a region from a center of thickness of the grain-oriented electrical steel sheet to an outer peripheral side of the wound iron core, is 100 µm or more and 400 µm or less.
[2] The wound iron core according to [1], wherein the width of the shear region is 150 µm or more and 350 µm or less.
[3] The wound iron core according to [1] or [2], wherein the corner includes an angled portion.
[4] A transformer comprising the wound iron core according to any one of [1] to [3] and a coil.

### (Advantageous Effect)

The wound iron core and transformer according to the present disclosure can improve the building factor by suppressing an increase in the number of production steps and the production costs.

### BRIEF DESCRIPTION OF THE DRAWINGS

In the accompanying drawings:
FIG. 1 is a diagram illustrating two types of wound iron cores;
FIG. 2 is a diagram illustrating the chemical composition of a steel slab when an experiment was conducted;
FIG. 3 is a diagram illustrating the results of measurements of the relationship between the building factor and the width of the shear region;
FIG. 4 is a diagram illustrating the results of measurements of the relationship between noise and the width of the shear region;
FIG. 5 is a diagram illustrating a schematic configuration of a wound iron core according to an embodiment of the present disclosure;
FIG. 6 is a diagram illustrating a schematic configuration of a transformer according to an embodiment of the present disclosure;
FIG. 7 is a diagram illustrating an example of the configuration of a bent portion;
FIG. 8 is a schematic diagram of a Kr map;
FIG. 9 is a schematic diagram of corners;
FIG. 10 is a diagram illustrating the chemical composition of a steel slab in the Examples;
FIG. 11A is a table illustrating information such as the relationship between the width of the shear region and the building factor in the Examples; and
FIG. 11B is a table illustrating information such as the relationship between the width of the shear region and the building factor in the Examples.

### DETAILED DESCRIPTION

### (Experiment results)

First, experiment results that led to the conception of an embodiment of the present disclosure will be described.

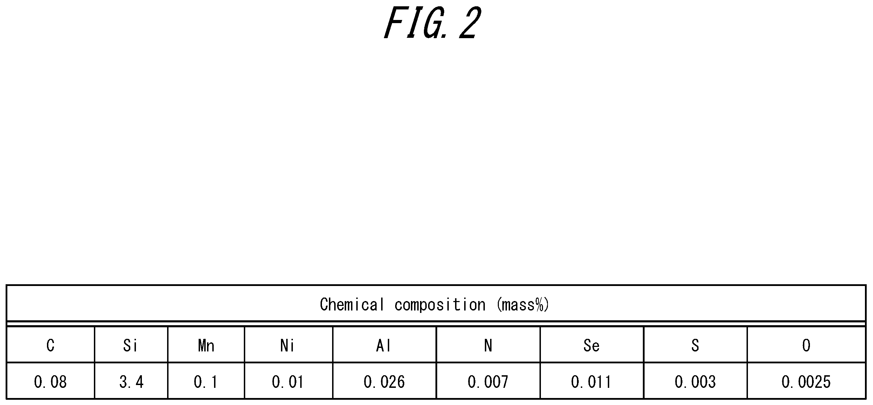

FIG. 2 illustrates the chemical composition of the steel slab when the experiment was conducted. In the experiment, a steel strip of a grain-oriented electrical steel sheet produced by a general production process using a steel slab having the chemical composition illustrated in FIG. 2 was used as a test material.

The steel strip of the grain-oriented electrical steel sheet was slit to a sheet width of 100 mm and wound into a shape with a stacking thickness of 30 mm, long sides of 300 mm, and short sides of 150 mm. In this way, a single-phase Unicore was produced. At this time, the portion corresponding to the short side was sheared off to form a shape called a cut core. In this case, three types of cores were produced with respect to the bent portion: one 90° bend, two 45° bends, and three 30° bends. In this case, each bending angle θ was set to θ ± 1°. When the cores were produced, none of the cores was subjected to stress relief annealing (SRA).

Using a single sheet sample cut out from the test steel strip, iron loss was measured by the single sheet magnetic property measurement method specified in JIS C2556. In addition to this measurement, the iron loss characteristics (transformer core loss) of each produced wound iron core transformer were measured when the magnetic flux density in the iron core legs was 1.7 T at a frequency of 50 Hz.

The iron loss characteristics at a magnetic flux density of 1.7 T in the iron core legs and a frequency of 50 Hz as described above were measured by measuring no-load loss using a wattmeter.

The building factor (BF) of each transformer was calculated from the ratio of the transformer core loss measured in this way to the single sheet iron loss.

Furthermore, each model transformer was excited in a soundproof room under the conditions of a maximum magnetic flux density Bm = 1.7 T and a frequency of 50 Hz, and the noise level dBA (transformer noise) was measured using a noise level meter.

After the various measurements were completed, a sample was cut out from a corner of the iron core and embedded in a carbon mold. Thereafter, a cross-section parallel to the rolling direction was polished and subjected to electron backscatter diffraction (EBSD) measurement.

From the results thus obtained, the kernel average misorientation (KAM) value was calculated. In addition, the width of the shear region in which shear bands were connected in the rolling direction was calculated. The shear bands were formed so that a plurality of points penetrated in the thickness direction in the region from the thickness center of the steel sheet to the outer peripheral side of the wound iron core, the points being such that the ratio Kr = Kp/Kave of the KAM value Kp at each point to the average KAM value Kave of the entire thickness cross-section of the bent portion exceeded 1.0.

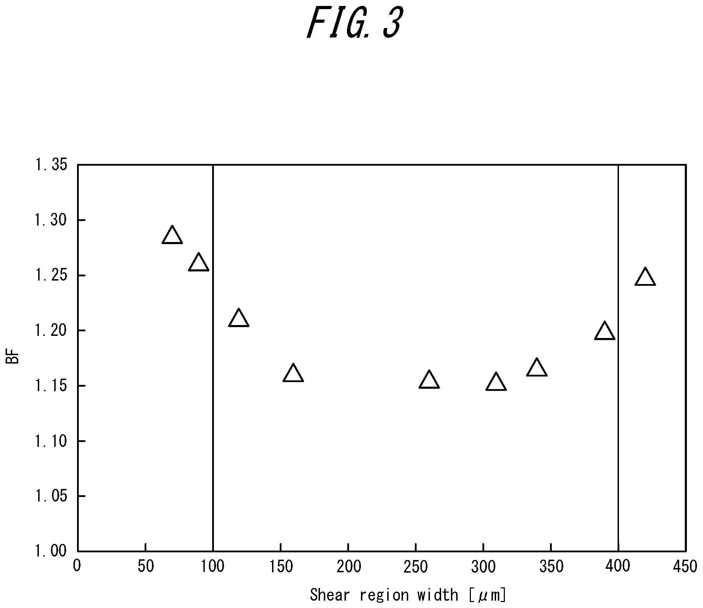

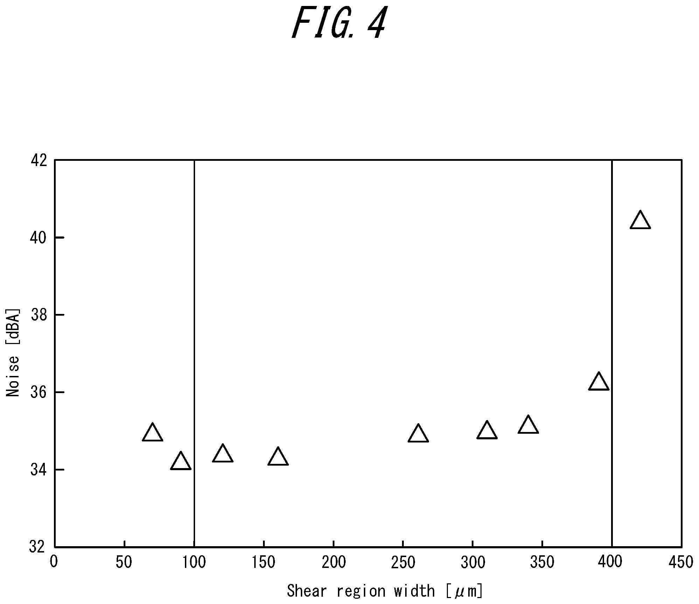

FIG. 3 illustrates the results of measurements of the relationship between the building factor and the width of the shear region. FIG. 4 illustrates the measurement results of the relationship between noise and the width of the shear region.

Referring to FIG. 3, the building factor improves as the width of the shear region increases. In particular, when the width of the shear region is 100 µm or more, a significant improvement effect is observed. This is thought to be because the KAM is the orientation difference between adjacent measurement points, and therefore the magnetization direction changes slightly within a shear region having a large Kr, resulting in the formation of a magnetic discontinuity and the manifestation of the magnetic domain refining effect.

Referring to FIG. 4, it can be seen that the noise of the transformer tends to increase as the width of the shear region increases. In particular, when the width of the shear region is 400 µm or more, the noise increases significantly. This is thought to be because the magnetostrictive property deteriorated due to increased strain inside the steel sheet.

From these results, it is clear that by setting the width of the shear region to 100 µm or more and 400 µm or less, a wound iron core with good characteristics can be obtained. The width of the shear region is more preferably 150 µm or more. The width of the shear region is more preferably 350 µm or less. It is also clear that by setting the width of the shear region to this more preferable range, a wound iron core with even better characteristics can be obtained.

### (Present embodiment)

Next, a wound iron core according to an embodiment of the present disclosure will be described with reference to the drawings.

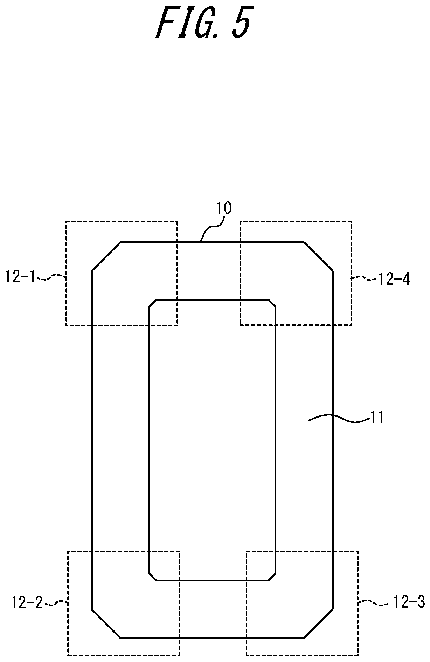

FIG. 5 is a diagram illustrating a schematic configuration of a wound iron core 10 according to an embodiment of the present disclosure.

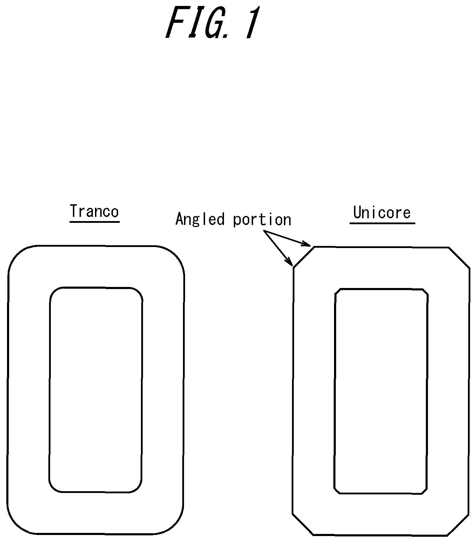

The wound iron core 10 is configured by winding a grain-oriented electrical steel sheet 11 in the rolling direction. The wound iron core 10 has corners 12-1 to 12-4. Hereinafter, when there is no need to particularly distinguish between the corners 12-1 to 12-4, they may be simply referred to as the "corner 12." FIG. 5 illustrates a case in which the wound iron core 10 is of Unicore type. When the wound iron core 10 is Unicore type, the corner 12 includes angled portions as illustrated in FIG. 1.

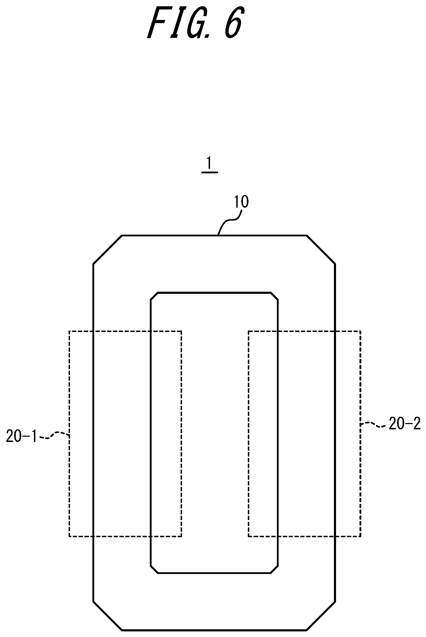

The wound iron core 10 can be used as a component of a transformer. FIG. 6 schematically illustrates the configuration of a transformer 1 according to an embodiment of the present disclosure. The transformer 1 includes the wound iron core 10, a coil 20-1, and a coil 20-2. The coils 20-1 and 20-2 are wound around the wound iron core 10 as illustrated in FIG. 2.

The grain-oriented electrical steel sheet 11 illustrated in FIG. 5 may be produced from a slab of steel material. The chemical composition of the slab for the grain-oriented electrical steel sheet 11 is a chemical composition capable of secondary recrystallization.

When an inhibitor is used in the grain-oriented electrical steel sheet 11, for example, when an AlN-based inhibitor is used, it suffices to add an appropriate amount of Al and N. When, for example, an MnS/MnSe-based inhibitor is used, it suffices to add an appropriate amount of Mn and of Se and/or S. It is also possible to use both inhibitors in combination.

When both inhibitors are used in combination, the preferred contents of Al, N, S and Se are as follows.
Al: 0.010 mass% to 0.065 mass%
N: 0.0050 mass% to 0.0120 mass%
S: 0.005 mass% to 0.030 mass%
Se: 0.005 mass% to 0.030 mass%

The grain-oriented electrical steel sheet 11 may be a steel sheet in which the contents of Al, N, S, and Se are limited and no inhibitor is used. In this case, the contents of Al, N, S and Se are preferably suppressed as follows.
Al: less than 0.010 mass%
N: less than 0.0050 mass%
S: less than 0.0050 mass%
Se: less than 0.0050 mass%

Representative basic components and optionally added components applied to the steel material (slab) for the grain-oriented electrical steel sheet 11 will be specifically described below.

### C: 0.08 mass% or less

C is added to improve the microstructure of the hot-rolled sheet. If the C content exceeds 0.08 mass%, it becomes difficult to decarburize the steel to 50 mass ppm or less, at which point magnetic aging does not occur, during the production process. Therefore, the C content is preferably 0.08 mass% or less. Furthermore, since secondary recrystallization occurs even in steel materials that do not contain C, no particular lower limit is set for the C content.

### Si: 2.0 mass% to 8.0 mass%

Si is an element that is effective in increasing the electrical resistance of steel and improving iron loss. If the Si content is less than 2.0 mass%, the above-described improvement effects are not sufficiently exhibited. On the other hand, if the Si content exceeds 8.0 mass%, the formability and sheet passing property are significantly deteriorated, and the magnetic flux density is also reduced. Therefore, the Si content is preferably 2.0 mass% or more. The Si content is preferably 8.0 mass% or less.

### Mn: 0.005 mass% to 1.0 mass%

Mn is an element necessary for improving hot workability. If the Mn content is less than 0.005 mass%, it is difficult to obtain a sufficient effect of improving the hot workability. On the other hand, if the Mn content exceeds 1.0 mass%, the magnetic flux density deteriorates. Therefore, the Mn content is preferably 0.005 mass% or more. The Mn content is preferably 1.0 mass% or less.

In addition to the above basic components, the slab for the grain-oriented electrical steel sheet 11 may contain one or more of the following optionally added components selected and added as appropriate. The following optionally added components are known to be effective in improving magnetic properties.
Ni: 0.03 mass% to 1.50 mass%
Sn: 0.01 mass% to 1.50 mass%
Sb: 0.005 mass% to 1.50 mass%
Cu: 0.03 mass% to 3.0 mass%
P: 0.03 mass% to 0.50 mass%
Mo: 0.005 mass% to 0.10 mass%
Cr: 0.03 mass% to 1.50 mass%

Ni is effective for improving the hot-rolled sheet microstructure and improving the magnetic properties. If the Ni content is less than 0.03 mass%, the contribution to improving the magnetic properties is small. On the other hand, if the Ni content exceeds 1.50 mass%, secondary recrystallization becomes unstable and the magnetic properties deteriorate. Therefore, the Ni content is preferably 0.03 mass% or more. The Ni content is preferably 1.50 mass% or less.

Sn, Sb, Cu, P, Mo, and Cr are also elements that improve magnetic properties. If the content of any of the elements is less than the lower limit, the effect of improving the magnetic properties is insufficient. Furthermore, if the content of any of the elements exceeds the upper limit, the growth of secondary recrystallized grains is suppressed, resulting in deterioration of magnetic properties. Therefore, the contents of Sn, Sb, Cu, P, Mo, and Cr are preferably each within the aforementioned content ranges.

The slab for the grain-oriented electrical steel sheet 11 contains Fe and inevitable impurities as components other than those mentioned above.

The steel material (slab) of the grain-oriented electrical steel sheet 11 having the aforementioned chemical composition is subjected to hot rolling and then to hot-rolled sheet annealing. The slab is then subjected to one or two passes of cold rolling. This finishes the steel strip having the final sheet thickness.

The steel strip of final sheet thickness is subsequently subjected to decarburization annealing and coated with an annealing separator. The steel strip having the final sheet thickness is then wound into a coil. The steel strip having the final sheet thickness is then subjected to final annealing for the purpose of secondary recrystallization. Subsequently, the steel strip after the final annealing is subjected to flattening annealing and a tension coating is formed, yielding a steel strip as a product sheet.

The process after the flattening annealing for producing the grain-oriented electrical steel sheet 11 may include a magnetic domain refining process in which thermal distortion is formed on the surface of the grain-oriented electrical steel sheet 11 by irradiating the surface with an energy beam. Furthermore, the processes from cold rolling onward for producing the grain-oriented electrical steel sheet 11 may include a magnetic domain refining process in which grooves are formed in the grain-oriented electrical steel sheet 11 by electrolytic etching or laser irradiation.

Next, a method of calculating the KAM value and the Kr value in the present embodiment will be described.

The corners 12 of the wound iron core 10 have bent portions. By being deformed and bent at the bent portion, the wound iron core 10 is bent at a 90° angle at the corner 12. Each corner 12 has at least one bent portion. For example, if the corner 12 has one bent portion, the corner 12 is bent at a 90° angle at the bent portion. If the corner 12 has two bent portions, for example, the corner 12 is bent at a 45° angle at each bent portion. Furthermore, if the corner 12 has three bent portions, for example, the corner 12 is bent at a 30° angle at each bent portion.

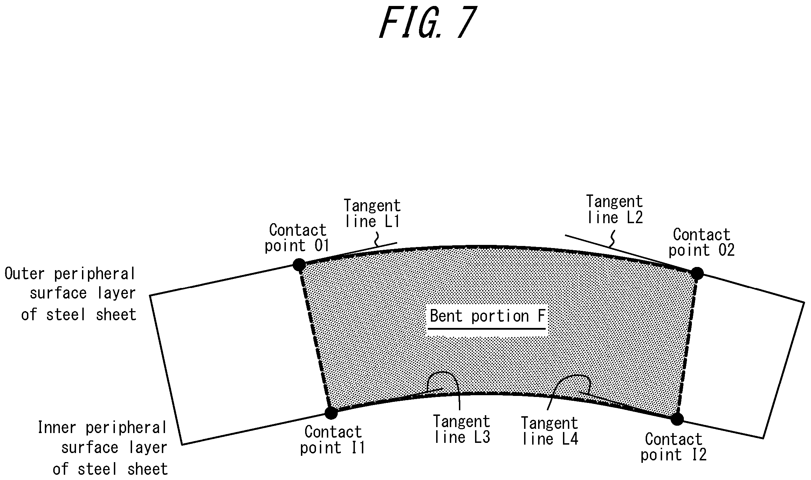

The bent portion will be described with reference to an example configuration of the bent portion illustrated in FIG. 7. The bent portion of the corner 12 is the region illustrated as the bent portion F in FIG. 7.

As illustrated in FIG. 7, tangent lines are drawn as half lines from the flat surfaces (the outer peripheral surface layer of the steel sheet and the inner peripheral surface layer of the steel sheet) of the regions (flat portions) that do not have a curvature radius and are present on both sides in the rolling direction, toward the region of the corner 12 that has a radius of curvature. In FIG. 7, tangent lines drawn from the outer peripheral surface layer of the grain-oriented electrical steel sheet 11, i.e., the outer peripheral surface layer of the steel sheet, are illustrated as tangent lines L1 and L2. Furthermore, in FIG. 7, tangent lines drawn from the inner peripheral surface layer of the grain-oriented electrical steel sheet 11, i.e., the inner peripheral surface layer of the steel sheet, are illustrated as tangent lines L3 and L4.

As illustrated in FIG. 7, the contact points between the tangent line L1 and the tangent line L2 and the outer peripheral surface layer of the steel sheet are designated as contact points O1 and O2, respectively. The contact points between the tangent line L3 and the tangent line L4 and the inner peripheral surface layer of the steel sheet are designated as contact points I1 and I2, respectively. At this time, the area enclosed by the four contact points O1, O2, I1, and I2 is the bent portion F.

When calculating the KAM value and the Kr value, a portion of the grain-oriented electrical steel sheet 11 is taken from the bent portion of the corner 12 of the wound iron core 10 so that the cross-section in the rolling direction is the cut surface. Next, the cut surface is subjected to distortion-free polishing.

Next, the crystal orientation difference of the polished surface that has been subjected to distortion-free polishing is analyzed by electron backscatter diffraction (EBSD), and the kernel average misorientation (KAM) value is calculated. In this case, the orientation difference is the orientation difference between a certain measurement point and a third adjacent point.

Then, in the region from the center of thickness of the grain-oriented electrical steel sheet 11 to the outer peripheral side of the wound iron core 10, the ratio of the KAM value Kp at each point to the average KAM value Kave of the entire thickness cross-section of the bent portion is defined as Kr (i.e., Kr = Kp/Kave).

In the present embodiment, the width of the shear region is measured using a Kr map in which the above-described Kr values are mapped over the entire observation plane. In the present embodiment, the "shear region" refers to the entire region in which shear bands are connected in the rolling direction, the shear bands being formed so that a plurality of points with a Kr value exceeding 1.0 penetrate the thickness of the grain-oriented electrical steel sheet 11.

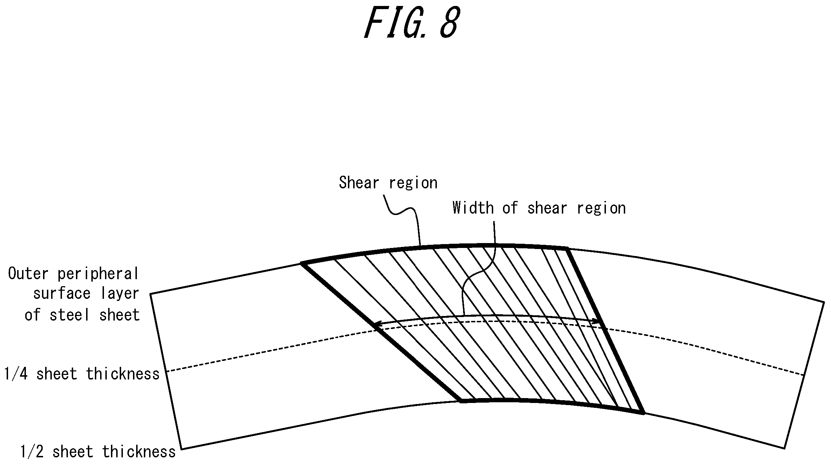

FIG. 8 illustrates a schematic diagram of a Kr map. FIG. 8 illustrates a schematic diagram of a Kr map of an observation region of the outer half of the grain-oriented electrical steel sheet 11, from the center of thickness (half the sheet thickness) of the grain-oriented electrical steel sheet 11 to the outer periphery of the wound iron core 10 (outer peripheral surface layer of the steel sheet), within the observation field of a cross-section parallel to the rolling direction in the bent portion of the corner 12.

In FIG. 8, the region indicated as shear region is the shear region defined as above. As illustrated in FIG. 8, the length of the shear region in the rolling direction at 1/4 sheet thickness is referred to as the "width of the shear region" in the present embodiment.

As explained in the above experimental results with reference to FIGS. 3 and 4, the width of the shear region is preferably 100 µm or more. The width of the shear region is preferably 400 µm or less. This makes it possible to obtain a wound iron core 10 with good characteristics. The width of the shear region is more preferably 150 µm or more. The width of the shear region is more preferably 350 µm or less. This makes it possible to obtain a wound iron core 10 with even better characteristics.

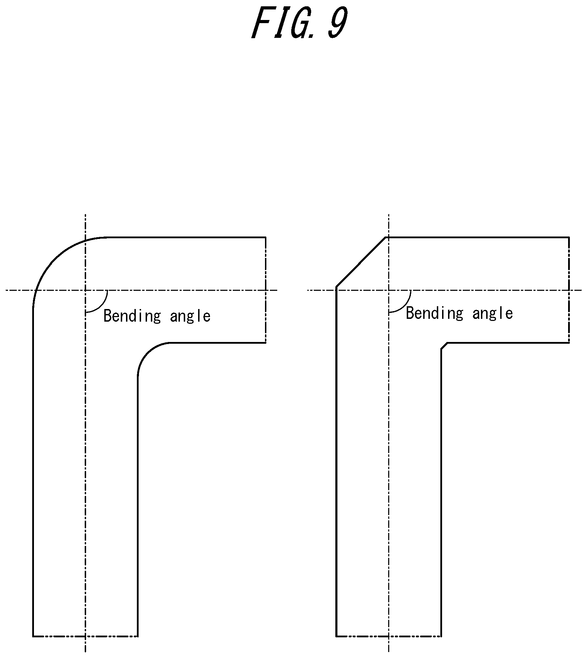

FIG. 9 is a schematic diagram of a corner 12 of the wound iron core 10.

When producing the wound iron core 10, if the wound iron core 10 is first processed so that the angle (bending angle) formed by the extension lines of the long and short sides adjacent to the corner 12 toward the inner periphery of the wound iron core 10 is less than 90°, and then bent back to form a rectangular shape, the width of the shear region can be made as described above, and a particularly pronounced effect can be easily obtained. Alternatively, when producing the wound iron core 10, the tensile coating of the grain-oriented electrical steel sheet 11 used for the wound iron core pieces may be provided with different film thicknesses or coating types on the inner and outer peripheral sides of the corner 12, and the wound iron core 10 may be produced using a sheet with a higher tension on the inner peripheral side than on the outer peripheral side. This approach also makes it possible to set the width of the shear region to the width described above, and a particularly pronounced effect can be easily obtained.

This is presumably because a shear region having the width of the shear region described above is generated for reasons such as the bending angle opening to 90° when the individual wound iron core pieces are assembled to form the wound iron core 10, and compressive stress being generated at the outer periphery of the sheet thickness of each steel sheet due to the difference in tension between the inside and outside.

However, the method of producing a wound iron core 10 having the above-described width of the shear region is not limited to this production method. Other production methods may also be used for the width of the shear region to become the above-described width. If the shear region of the corner 12 has the width described above, the wound iron core 10 can achieve the effect of improving the building factor due to the magnetic domain refining effect.

As described above, the wound iron core 10 is configured by winding a grain-oriented electrical steel sheet 11 in the rolling direction, and the width of the shear region of the wound iron core 10 in a cross-section parallel to the rolling direction at the bent portion of the corner 12 of the wound iron core 10, within a region from the center of thickness of the grain-oriented electrical steel sheet 11 to an outer peripheral side of the wound iron core 10, is 100 µm or more and 400 µm or less. By setting the width of the shear region in this range, the wound iron core 10 according to the present embodiment can optimize the KAM value of the cross-section parallel to the rolling direction. Therefore, the wound iron core 10 according to the present embodiment can improve the building factor and the iron loss of the wound iron core 10. In this case, the wound iron core 10 according to the present embodiment can be produced with fewer production steps, thereby reducing the number of production steps and production costs.

### EXAMPLES

Next, the content of the present disclosure will be specifically described based on Examples. The following Examples are provided to illustrate preferred examples of the present disclosure, and the present disclosure is not limited to these Examples. It is also possible to implement the present disclosure by making modifications without departing from the scope and spirit of the disclosure, and such modes are also encompassed by the technical scope of the disclosure.

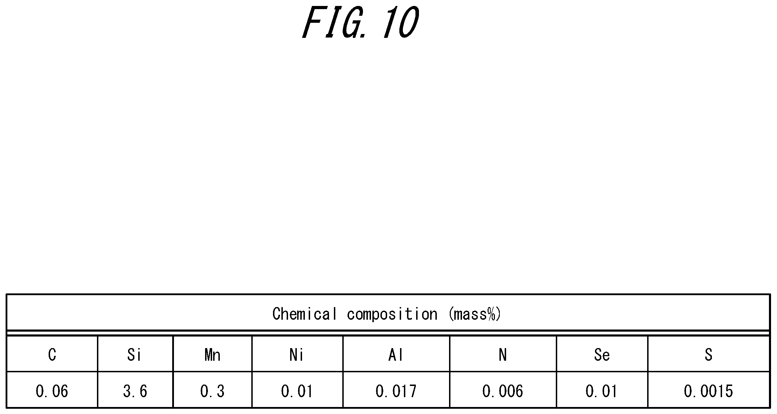

FIG. 10 is a diagram illustrating the chemical composition of the steel slab in the Examples. Using such a steel slab, steel strips A, B, C and D were produced.

Steel strip A is a grain-oriented electrical steel sheet produced by a general production process. Steel strip B is a grain-oriented electrical steel sheet that has been subjected to electrolytic etching on the surface of the steel strip after the cold rolling process to form linear grooves 15 µm deep and 40 µm wide periodically at 5 mm intervals in a direction perpendicular to the rolling direction and has then been subjected to a final annealing process. Steel strip C is a grain-oriented electrical steel sheet obtained by irradiating a portion of steel strip A with a laser. Steel strip D is a grain-oriented electrical steel sheet obtained by irradiating a portion of steel strip A with an electron beam.

These steel strips A, B, C and D were used as test materials. In this case, the type of tension coating was the same, and the coating thickness was varied within the range of 1 µm to 5 µm on the outer and inner periphery of the wound iron core to produce steel strips of grain-oriented electrical steel sheets.

Test pieces (samples) measuring 100 mm wide × 280 mm long were cut out from the steel strips of test material produced as described above, and the iron loss of each test piece was measured by the single sheet magnetic property measurement method described in JIS C2556.

Subsequently, each steel strip was wound in the rolling direction to produce a three-phase wound iron core model transformer (iron core weight 50 kg). For steel strips A and B, both Tranco and Unicore types were produced. For Unicore, cores that had been annealed to relieve strain were also created. For steel strips C and D, only Unicore was produced because the magnetic domain refining effect of the laser and electron beam was lost by stress relief annealing.

For each of the produced transformers, the iron loss characteristics were measured when the magnetic flux density in the iron core legs was 1.7 T at a frequency of 50 Hz. The iron loss characteristics under the conditions of a magnetic flux density of 1.7 T and a frequency of 50 Hz were measured by no-load loss using a wattmeter. At the same time, this model transformer was excited in a soundproof room under the conditions of a maximum magnetic flux density Bm = 1.7 T and a frequency of 50 Hz, and the noise level (dBA) was measured using a noise level meter.

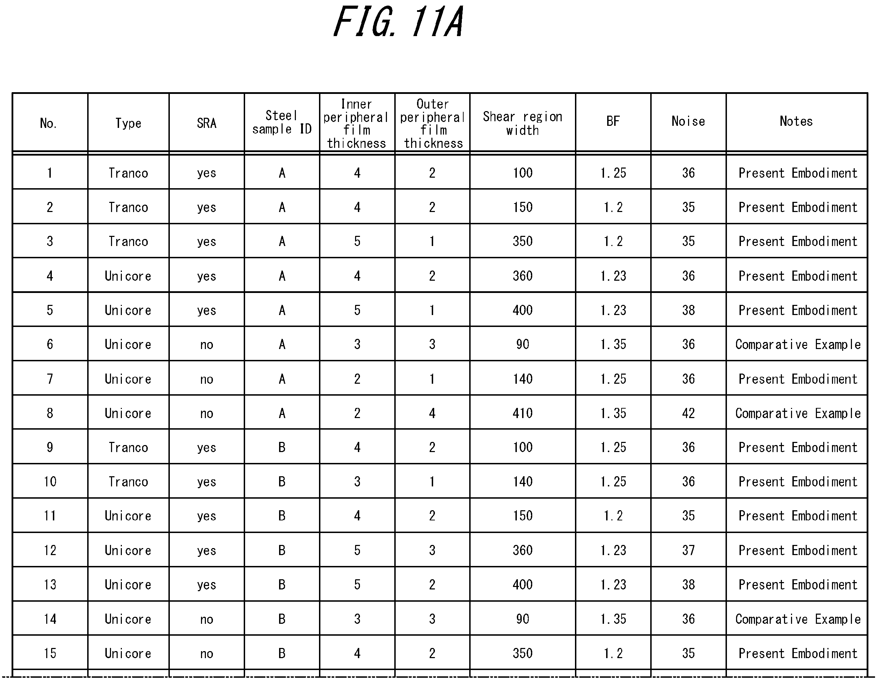

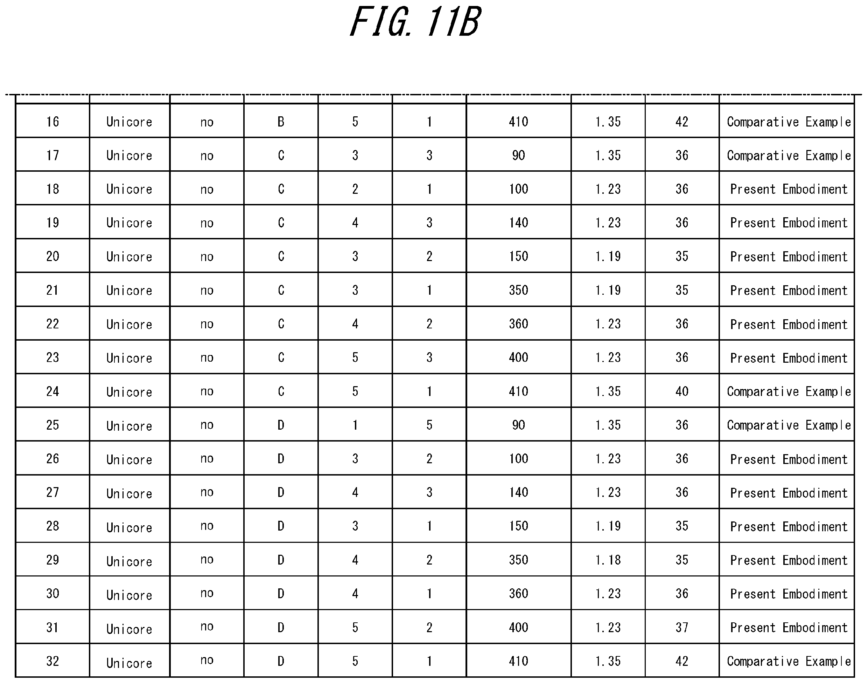

After the various measurements were completed, a sample was cut out from a corner of the iron core and embedded in a carbon mold. The cross-section parallel to the rolling direction was then polished and subjected to EBSD measurement. In addition, the KAM value was calculated from the obtained results, and the width of the shear region was calculated within the region from the thickness center of the steel sheet to the outer peripheral side of the wound iron core. These results are illustrated in FIGS. 11A and 11B.

From FIGS. 11A and 11B, it can be seen that under conditions satisfying the configuration of the present embodiment, a good transformer that achieves low iron loss and low noise can be obtained. It can also be seen that Unicore has a greater effect on improving BF than Tranco. In particular, when the width of the shear region is 150 µm or more and 350 µm or less, the improvement in the transformer characteristics is remarkable.

The present disclosure is not limited to the embodiments described above. For example, a plurality of blocks described in the block diagrams may be integrated, or a block may be divided. Instead of executing a plurality of steps described in the flowcharts in chronological order in accordance with the description, the plurality of steps may be executed in parallel or in a different order according to the processing capability of the apparatus that executes each step, or as required. Other modifications can be made without departing from the spirit of the present disclosure.

### REFERENCE SIGNS LIST

- 1: Transformer
- 10: Wound iron core
- 11: Grain-oriented electrical steel sheet
- 12: Corner
- 20: Coil

## Claims

1. A wound iron core configured by winding a grain-oriented electrical steel sheet in a rolling direction, wherein
a width of a shear region in a cross-section parallel to the rolling direction at a bent portion of a corner of the wound iron core, within a region from a center of thickness of the grain-oriented electrical steel sheet to an outer peripheral side of the wound iron core, is 100 µm or more and 400 µm or less.

2. The wound iron core according to claim 1, wherein the width of the shear region is 150 µm or more and 350 µm or less.

3. The wound iron core according to claim 1 or 2, wherein the corner includes an angled portion.

4. A transformer comprising the wound iron core according to any one of claims 1 to 3 and a coil.
